(19) **Europäisches Patentamt**

**European Patent Office**

**Office européen des brevets**

(11) **EP 1 368 407 B1**

(12) **EUROPÄISCHE PATENTSCHRIFT**

(45) Veröffentlichungstag und Bekanntmachung des Hinweises auf die Patenterteilung:
**18.05.2005   Patentblatt 2005/20**

(51) Int Cl.7: **C08G 65/26**, B01F 5/00, B01F 5/18, B01F 5/16, B01F 5/06

(21) Anmeldenummer: **02714155.5**

(22) Anmeldetag: **11.02.2002**

(86) Internationale Anmeldenummer:
**PCT/EP2002/001398**

(87) Internationale Veröffentlichungsnummer:
**WO 2002/068503 (06.09.2002 Gazette 2002/36)**

(54) **VERBESSERTES VERFAHREN ZUR HERSTELLUNG VON POLYETHERPOLYOLEN**

IMPROVED METHOD FOR PRODUCING POLYETHER POLYOLS

Procédé perfectioné pour produire des éthers de polyol

(84) Benannte Vertragsstaaten:
**AT BE CH CY DE DK ES FI FR GB GR IE IT LI LU MC NL PT SE TR**
Benannte Erstreckungsstaaten:
**RO**

(30) Priorität: **22.02.2001  DE 10108484**

(43) Veröffentlichungstag der Anmeldung:
**10.12.2003   Patentblatt 2003/50**

(73) Patentinhaber:
  • **Bayer MaterialScience AG**
    **51368 Leverkusen (DE)**
  • **Bayer Corporation**
    **Pittsburgh, PA 15205 (US)**

(72) Erfinder:
  • **HOFMANN, Jörg**
    **47829 Krefeld (DE)**
  • **EHLERS, Stephan**
    **50937 Köln (DE)**
  • **KLINKSIEK, Bernd**
    **51429 Bergisch Gladbach (DE)**
  • **OBENDORF, Lars**
    **51065 Köln (DE)**
  • **STEINLEIN, Christian**
    **40822 Ratingen (DE)**
  • **KLESCZEWSKI, Bert**
    **51069 Köln (DE)**
  • **PAZOS, Jose, F.**
    **Charleston, WV 25304 (US)**

(74) Vertreter: **Perchenek, Nils, Dr. et al**
    **Bayer AG,**
    **Bayer MaterialScience AG,**
    **Law & Patents,**
    **Patents & Licensing**
    **51368 Leverkusen (DE)**

(56) Entgegenhaltungen:
**EP-A- 0 050 312**          **EP-A- 0 853 975**
**WO-A-95/30476**          **DE-A- 19 928 156**
**FR-A- 1 181 577**          **US-A- 5 159 092**
**US-A- 5 689 012**          **US-A- 5 902 042**

**Beschreibung**

Die Erfindung betrifft ein verbessertes Verfahren zur Herstellung von Polyetherpolyolen mittels Doppelinetallcyanid(DMC)-Katalyse durch Polyaddition von Alkylenoxiden an aktive Wasserstoffatome aufweisende Starterverbindungen.

Die Herstellung von Polyetherpolyolen wird technisch zum größten Teil durch Polyaddition von Alkylenoxiden an polyfunktionelle Starterverbindungen, wie z.B. Alkohole, Säuren, oder Amine mittels Basenkatalyse (z.B. KOH) durchgeführt (siehe z.B. Gum, Riese & Ulrich (Hrsg.): "Reaction Polymers", Hanser Verlag, München, 1992, S.75-96). Nach Beendigung der Polyaddition muss der basische Katalysator in einem sehr aufwendigen Verfahren aus dem Polyetherpolyol entfernt werden, z.B. durch Neutralisation, Destillation und Filtration. Die basenkatalysiert hergestellten Polyetherpolyole haben außerdem den Nachteil, dass mit zunehmender Kettenlänge der Gehalt an monofunktionellen Polyethem mit endständigen Doppelbindungen (sog. Monoolen) stetig zunimmt und die Funktionalität sinkt.

Die erhaltenen Polyetherpolyole können zur Herstellung von Polyurethanen (z.B. Elastomeren, Schäumen, Beschichtungen) eingesetzt werden, insbesondere auch zur Herstellung von Polyurethan-Weichschaumstoffen. Weichschaumstoffe setzen einer Druckbeanspruchung einen geringen Widerstand entgegen, sind offenzellig, luftdurchlässig und reversibel verformbar. Man unterscheidet Blockschäume und Formschäume (siehe z.B. Kunststoffhandbuch, Bd. 7, 3. Auflage, Hanser Verlag, München, 1993, S. 193-252). Blockschaumstoffe werden kontinuierlich oder diskontinuierlich als Halbzeuge hergestellt und anschließend auf die der Anwendung (z.B. Polstermöbel, Matratzen) entsprechende Abmessung und Kontur zugeschnitten. Dagegen werden Formschäume nach einem diskontinuierlichen Verfahren hergestellt, bei dem die Schaumkörper in der gewünschten Gestalt (durch Ausschäumen einer entsprechenden Form) direkt erhalten werden.

Doppelmetallcyanid(DMC)-Katalysatoren für die Herstellung von Polyetherpolyolen sind seit langem bekannt (siehe beispielsweise US-A 3 404 109, US-A 3 829 505, US-A 3 941 849 und US-A 5 158 922). Der Einsatz dieser DMC-Katalysatoren für die Herstellung von Polyetherpolyolen bewirkt insbesondere eine Reduzierung des Anteils an monofunktionellen Polyethern (Monoolen), im Vergleich zu der konventionellen Herstellung von Polyetherpolyolen mittels basischer Katalysatoren. Verbesserte DMC- Katalysatoren, wie sie z.B. in EP-A 700 949, EP-A 761 708, WO 97/40086, WO 98/16310, DE-A 197 45 120, DE-A 197 57 574 oder DE-A 198 102 269 beschrieben sind, besitzen zudem eine außerordentlich hohe Aktivität und ermöglichen die Herstellung von Polyetherpolyolen bei sehr geringer Katalysatorkonzentration (25 ppm oder weniger), so dass eine Abtrennung des Katalysators aus dem Polyol nicht mehr erforderlich ist.

Die mittels DMC-Katalyse erhaltenen Polyetherpolyole können bei der Herstellung von Polyurethanschaum, insbesondere von Polyurethan-Weichschaumstoffen zu anwendungstechnischen Problemen führen, beispielsweise zu einer Schaumdestabilisierung (verstärkte Kollapsanfälligkeit) oder zu erhöhter Grobzelligkeit. DMC-katalysierte Polyetherpolyole können deshalb nicht in allen Fällen entsprechende basenkatalysierte Polyole in Polyurethan-Weichschaumanwendungen ohne Anpassung der Formulierung ersetzen.

Es wurde nun gefunden, dass Polyetherpolyole, die vollständig oder teilweise mittels DMC-Katalyse hergestellt werden, deutlich verbesserte Verschäumungseigenschaften bei der Herstellung von Polyurethanschäumen besitzen, wenn das Polyetherpolyol während der DMC-katalysierten Polyaddition von Alkylenoxiden an aktive Wasserstoffatome aufweisende Starterverbindungen durch ein geeignetes Mischaggregat geführt wird.

Die vorliegende Erfindung betrifft somit ein verbessertes Verfahren zur Herstellung von Polyetherpolyolen, bei dem das Polyetherpolyol vollständig oder teilweise durch doppelmetallcyanid-katalysierte Polyaddition von Alkylenoxiden an aktive Wasserstoffatome aufweisende Starterverbindungen hergestellt wird und bei dem das Polyetherpolyol während der DMC-katalysierten Polyaddition durch ein geeignetes Mischaggregat geführt wird. Weiterhin betrifft die vorliegende Erfindung die Verwendung der so erhaltenen Polyetherpolyole zur Herstellung von Polyurethanschaum, insbesondere Polyurethan-Weichschaumstoffen.

Die für das erfindungsgemäße Verfahren geeigneten DMC-Katalysatoren sind im Prinzip bekannt. Bevorzugt eingesetzt werden DMC-Katalysatoren, wie sie aus JP-A 4 145 123, EP-A 654 302, EP-A 700 949, EP-A 743 093, EP-A 761 708, WO 97/40086, WO 98/16310, WO 99/19062, WO 99/19063, WO 99/33562, DE-A 198 34 572, 198 34 573, 198 42 382, 198 42 383, 199 05 611, 199 06 985, 199 13 260, 199 20 937 oder 199 24 672 hervorgehen. Ein typisches Beispiel sind die in EP-A 700 949 beschriebenen hochaktiven DMC- Katalysatoren, die neben einer Doppelmetallcyanid-Verbindung (z.B. Zinkhexacyanocobaltat(III)) und einem organischen Komplexliganden (z.B. tert.-Butanol) noch ein Polyetherpolyol mit einem zahlenmittlerem Molkulargewicht größer 500 g/mol enthalten.

Als Starterverbindungen mit aktiven Wasserstoffatomen werden vorzugsweise Verbindungen mit Molkulargewichten von 18 bis 2.000 g/mol, bevorzugt 62 bis 1.000 g/mol und 1 bis 8, bevorzugt 2 bis 6 Hydroxylgruppen eingesetzt. Beispielhaft genannt seien Butanol, Ethylenglykol, Diethylenglykol, Triethylenglykol, 1,2-Propylenglykol, 1,4-Butandiol, 1,6-Hexandiol, Bisphenol-A, Trimethylolpropan, Glycerin, Pentaeiythrit, Sorbit, Rohrzucker, abgebaute Stärke, Wasser oder sogenannte vorverlängerte Starter, die aus den zuvor genannten Verbindungen durch Alkoxylierung erhalten werden.

Als Alkylenoxide kommen bevorzugt Ethylenoxid, Propylenoxid, Butylenoxid sowie deren Mischungen zum Einsatz. Der Aufbau der Polyetherketten kann mit nur einem monomeren Epoxid durchgeführt werden oder auch statistisch oder blockweise mit 2 oder 3 unterschiedlichen monomeren Epoxiden erfolgen. Näheres ist "Ullmanns Encyclopädie der industriellen Chemie", Band A21, 1992, S. 670f. zu entnehmen.

Die Polyaddition kann grundsätzlich nach jedem für die DMC-Katalyse bekannten Alkoxylierungsverfahren durchgeführt werden.

Beispielsweise kann ein konventioneller Batchprozess eingesetzt werden. Hierbei werden der DMC-Katalysator und die Starterverbindung im Batchreaktor vorgelegt, anschließend wird der Reaktor auf die gewünschte Temperatur aufgeheizt und eine zur Katalysatoraktivierung ausreichende Menge an Alkylenoxid zugegeben. Sobald der Katalysator aktiviert ist, was sich z.B. durch einen Druckabfall im Reaktor bemerkbar macht, wird das restliche Alkylenoxid kontinuierlich zudosiert, bis das gewünschte Molekulargewicht des Polyetherpolyols erreicht ist.

Es kann auch ein kontinuierlicher Prozess angewendet werden, bei dem eine voraktivierte Mischung aus DMC-Katalysator und Starterverbindung kontinuierlich einem Konti-Reaktor, z.B. einem kontinuierlichen Rührreaktor (CSTR) oder einem Rohrreaktor zugeführt wird. Alkylenoxid wird in den Reaktor dosiert, und das Produkt kontinuierlich abgeführt.

Bevorzugt wird die DMC-katalysierte Polyaddition allerdings nach einem Verfahren durchgeführt, bei dem die Starterverbindung während der Polyaddition kontinuierlich zudosiert wird. Die DMC-katalysierte Polyaddition mit kontinuierlicher Starter-Dosierung kann dabei nach einem Batchverfahren, wie es WO 97/29146 lehrt, oder einem kontinuierlichen Verfahren, wie es aus WO 98/03571 hervorgeht, erfolgen.

Die DMC-katalysierte Polyaddition kann bei Drücken von 0,0001 bis 20 bar, bevorzugt von 0,5 bis 10 bar, besonders bevorzugt von 1 bis 6 bar erfolgen. Die Reaktionstemperaturen betragen 20 bis 200°C, bevorzugt 60 bis 180°C, besonders bevorzugt 80 bis 160°C.

Die DMC-Katalysatorkonzentration beträgt im Allgemeinen 0,0005 bis 1 Gew.-%, bevorzugt 0,001 bis 0,1 Gew.-%, besonders bevorzugt 0,001 bis 0,01 Gew.-%, bezogen auf die Menge des herzustellenden Polyetherpolyols.

Erfindungsgemäß wird das Polyetherpolyol während der DMC-katalysierten Polyaddition durch eine Zone mit hoher Energiedichte geführt, wie sie beispielsweise in einem geeigneten Mischaggregat auftritt. Der prinzipielle Aufbau geeigneter Mischaggregate zur erfindungsgemäßen Behandlung der Polyetherpolyole soll im folgenden beschrieben werden.

Geeignete Mischaggregate zeichnen sich dadurch aus, dass sie aufgrund ihrer Geometrie eine hohe lokale Energiedichte in Form von Strömungsenergie in das Produkt eintragen. Da für diese Aufgabe häufig hohe Drücke eingesetzt werden, werden diese Mischaggregate auch als Hochdruckhomogenisatoren bezeichnet. Mischaggregate, die besonders geeignet für solche Aufgaben sind, sind statische Mischer und/oder Düsenaggregate. Insbesondere geeignet sind einfache Lochblenden, Flachdüsen, Zackendüsen, Messerkantendüsen, Microfluidizer, wie sie in US-A 4 533 254 beschrieben sind, Mikrostrukturmischer, Mikrostrukturbauteile oder Strahldispergatoren. Weitere Geometrien, die nach dem gleichen Prinzip dieser oder anderer Düsenaggregate arbeiten, sind dem Fachmann leicht zugänglich. Am Beispiel einer einfachen Lochblende sei das Funktionsprinzip dieser Düsenaggregate erklärt. Der Produktstrom wird durch eine Pumpe unter Druck gesetzt und durch die Blende entspannt. Aufgrund der plötzlichen Querschnittsverengung wird der Produktstrom in der Düse stark beschleunigt. Je nach Geometrie der Blende können dabei zweierlei Kräfte auf das Produkt einwirken. Entweder wird der Produktstrom so stark beschleunigt, dass die Strömung in der Düse turbulent ist, oder, im Fall einer laminaren Strömung, kommt es in der Düse zur Ausbildung einer sogenannten Dehnströmung.

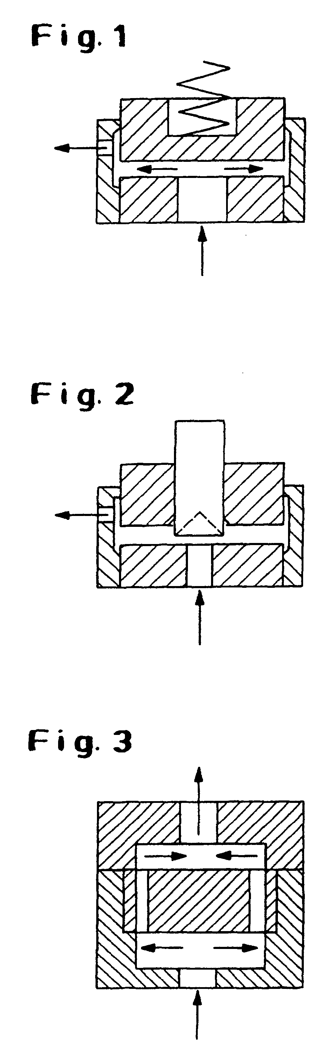

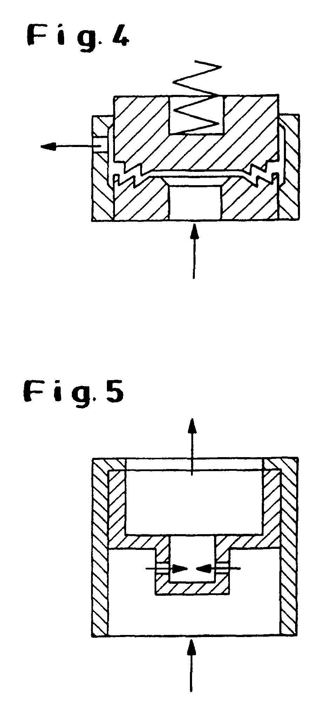

In Fig. 1 bis 5 sind weitere Beispiele von geeigneten Düsenaggregaten dargestellt. Fig. 1 zeigt eine Flachdüse, in Fig. 2 ist eine Messerkantendüse dargestellt, während in Fig. 3 ein Microfluidizer wiedergegeben ist. In Fig. 4 ist eine Zackendüse abgebildet und in Fig. 5 wird ein Strahldispergator gezeigt.

Neben diesen Mischaggregaten, die eine hohe Energiedichte in Form von Strömungsenergie in das Produkt eintragen, sind ebenfalls solche Apparate geeignet, die eine hohe Energiedichte durch rotierende Teile einbringen, wie z.B. Rotor-Stator-Systeme, Kugelmühlen, Kolloidmühlen, Nassrotormühlen, Zahnkranz-Dispergiermaschinen, Intensivmischer, die das Prinzip der Zahnkranz-Dispergiermaschinen einsetzen jedoch in axialer Richtung durchströmt werden, oder andere, rotierende Teile einsetzende Apparate, die dem Fachmann leicht zugänglich sind und für die gestellte Aufgabe eingesetzt werden können.

Weiterhin seien noch jene Mischaggregate erwähnt, die wie z.B. Ultraschalldesintegratoren durch Kavitation hohe Energiedichten erzeugen. Unter Kavitation wird dabei das Entstehen und Kollabieren von Dampfblasen in einer Flüssigkeit verstanden, in welcher ein isothermer Druckabfall zunächst bis zum Dampfdruck der Flüssigkeit erfolgt und der Druck anschließend wieder ansteigt. Durch den Druckanstieg kollabieren die entstandenen Gasblasen wieder. Bei dem Kollabiervorgang wird die zerkleinerungswirksame Energie freigesetzt. Durch Zusatz einer Flüssigkeit mit einem geeigneten Dampfdruck kann daher auch auf diese Weise bei Polyethern die notwendige Energiedichte erreicht werden.

Darüber hinaus können auch Kombinationen der genannten oder ähnlicher Mischaggregate eingesetzt werden.

Entscheidend sind im erfindungsgemäßen Verfahren, unabhängig von der Art der verwendeten Mischaggregate, die Höhe der in das Produkt eingetragenen Energiedichte und die Verweilzeit des Produkts im Bereich hoher Energiedichten. Es hat sich gezeigt, dass die Verschäumungseigenschaften der durch das erfindungsgemäße Verfahren erhaltenen Polyetherpolyole nur dann verbessert sind, wenn bestimmte Mindestwerte für Energiedichte und Gesamtverweilzeit (Produkt aus Verweilzeit pro Durchgang und Anzahl der Durchgänge) im Mischaggregat nicht unterschritten werden. Dabei hat sich auch gezeigt, dass dieser Effekt mit wesentlich niedrigeren Energiedichten erreicht werden kann, wenn das Polyetherpolyol schon während der DMC-katalysierten Polyaddition durch ein geeignetes Mischaggregat geführt wird, als wenn das Polyetherpolyol erst nach dem Ende der Polyadditionsreaktion durch das Mischaggregat geführt wird. Dadurch ergeben sich niedrigere Invest- und Instandhaltungskosten, da Pumpen mit einem deutlich niedrigeren Leistungsbedarf und niedrigeren Förderdrücken einsetzbar sind, die gegenüber Hochdruckpumpen deutliche Kostenvorteile bieten.

Die Energiedichte $E_v$ wird dabei im Falle der Düsenaggregate durch die an der Düse wirksame Druckdifferenz (Homogenisierdruck) $\Delta p_H$ bestimmt:

$$E_v[J / m^3] = \Delta p_H$$

Für Mischaggregate, die nach dem Prinzip der Rotor-Stator-Systeme arbeiten, kann die Energiedichte experimentell aus der eingebrachten Leistung P, der Dichte $\rho$, dem dispergierwirksamen Volumen $V_{sp}$ und der Verweilzeit t in diesem Volumen folgendermaßen berechnet werden:

$$E_v[J/m^3]=P \times \rho^{-1} \times V_{sp}^{-1} {}^* \times t$$

Erfindungsgemäß sollten Energiedichten von mindestens $1 \times 10^5$ J/m$^3$, bevorzugt mindestens $3 \times 10^5$ J/m$^3$ und besonders bevorzugt mindestens $5 \times 10^5$ J/m$^3$ eingesetzt werden. Die Verweilzeit des Produkts in den entsprechenden Zonen mit hohen Energiedichten sollte mindestens $1 \times 10^{-6}$ Sekunden betragen. In der Regel wird sie $1 \times 10^{-5}$ bis 1 Sekunde betragen. Das Polyol wird mindestens einmal durch mindestens eine Zone mit hoher Energiedichte geschickt. In der Regel werden jedoch mehrere Durchgänge durch das Mischaggregat realisiert.

Die Mischaggregate müssen so angebracht sein, dass sie direkt in den Mischungsvorgang der Alkoxylierung eingreifen. Dazu können die Mischaggregate z.B. in einen Umpumpkreislauf des Reaktors eingebracht werden. Das Polyetherpolyol wird zusammen mit unreagiertem Starter, Alkylenoxid und Katalysator durch die Mischaggregate geführt. Die Zugabe der Reaktanden und des Katalysators kann dabei unabhängig von diesem Mischaggregat an einer anderen Stelle im Reaktor erfolgen. Es werden für die Durchführung des erfindungsgemäßen Verfahrens in den Umpumpkreislauf bevorzugt Düsen und Blenden eingebaut, besonders bevorzugt werden Strahldispergatoren verwendet. Die zur Erzielung des gewünschten Effekts notwendige Energiedichte ist dabei unabhängig vom Reaktordruck. Entscheidend ist einzig die Energiedichte in der Düse oder Blende, die proportional dem Druckverlust vor der Düse oder Blende ist.

In einer weiteren Ausführungsform des erfindungsgemäßen Verfahrens werden die Mischaggregate direkt zur Vermischung der Eduktströme mit dem Reaktorinhalt benutzt. Für diese Aufgabe besonders geeignet sind Strahldispergatoren, da sie hohe Energiedichten erzeugen, wodurch extrem schnell die Komponenten vermischt werden können. Die Edukte, beispielsweise 1. ein Startergemisch, welches entweder nur eine Komponente oder ein Gemisch verschiedener geeigneter Verbindungen mit aktiven Wasserstoffatomen enthält, 2. ein Alkylenoxid oder ein Gemisch von Alkylenoxiden und optional 3. eine Katalysatorsuspension, werden unter Bedingungen, unter denen sie nicht miteinander reagieren, auf beliebige, geeignete Weise homogenisiert und anschließend im Strahldispergator mit dem aktiven DMC-Katalysator enthaltenen Polyetherpolyol vermischt. Geeignet bedeutet in diesem Zusammenhang, dass eine homogene Katalysatordispersion erhalten wird.

Bei einer anderen Variante werden die Edukte in einer beliebigen Reihenfolge, möglichst in kurzen Abständen hintereinander, über geeignete Mischaggregate mit dem aktiven DMC-Katalysator enthaltenen Polyetherpolyol vermischt. Für diese Prozessführung werden bevorzugt mehrere hintereinander geschaltete Düsen eingesetzt, wobei mehrere hintereinander geschaltete Strahldispergatoren besonders bevorzugt sind. Die Reihenfolge der zugegebenen Reaktanden ist dabei für die Lösung der erfindungsgemäßen Aufgabe nicht wesentlich. Es ist bevorzugt, erst das Alkylenoxid oder das Gemisch von Alkylenoxiden und dann das Startergemisch, welches entweder nur eine Komponente oder ein Gemisch verschiedener geeigneter Verbindungen mit aktiven Wasserstoffatomen enthält, zuzudosieren, da auf diese Weise eine mögliche Deaktivierung des aktiven Katalysators durch eine zu hohe lokale Konzentration an niedermolekularen Starterverbindungen verhindert wird. Für die Zugabe des Katalysators gibt es keinerlei Präferenz.

Die Behandlung des Polyetherpolyols mit dem Mischaggregat erfolgt im Allgemeinen bei Temperaturen von 20 bis 200°C, bevorzugt 60 bis 180°C, besonders bevorzugt 80 bis 160°C.

Bei dem erfindungsgemäßen Verfahren wird das Polyetherpolyol vollständig oder teilweise durch dappelmetallcyanid-kaialysierte Polyaddition von Alkylenoxiden an aktive Wasserstoffatome aufweisende Starterverbindungen hergestellt.

Bei einer nur teilweisen Herstellung des Polyetherpolyols mittels DMC-Katalyse können zum weiteren Aufbau des Polyetherpolyols beliebige alternative (saure, basische oder koordinative) Katalysatoren eingesetzt werden.

Bei einem konventionellen Batchprozess ist es beispielsweise vorteilhaft, als Starterverbindungen für die DMC-Katalyse oligomere Alkoxylierungsprodukte mit zahlenmittleren Molekulargewichten von 200 bis 2.000 g/mol einzusetzen. Diese können durch Alkoxylierung niedermolekularer Starterverbindungen wie z.B. 1,2-Propylenglykol oder Glycerin mittels konventioneller Basenkatalyse (z.B. KOH) oder saurer Katalyse hergestellt werden.

Auch der sogenannte EO-Cap, bei dem z.B. Poly(oxypropylen)polyole oder Poly-(oxypropylen/oxyethylen) polyole mit Ethylenoxid umgesetzt werden, um den überwiegenden Teil der sekundären OH-Gruppen des Polyetherpolyols in primäre OH-Gruppen umzuwandeln, wird bevorzugt mittels Basenkatalyse (z.B. KOH) durchgeführt.

Bevorzugt erfolgt die Herstellung der Polyetherpolyole im erfindungsgemäßen Verfahren so, dass mindestens 20 Gew.-%, bevorzugt mindestens 40 Gew.-% (jeweils bezogen auf die Mengen des zu Herstellung des Polyetherpolyols eingesetzten Alkylenoxids) des eingesetzten Alkylenoxid mittels DMC-Katalyse umgesetzt werden.

Die nach dem erfindungsgemäßen Verfahren hergestellten Polyetherpolyole besitzen deutlich verbesserte Verschäumungseigenschaften bei der Herstellung von Polyurethan-Weichschaumstoffen.

**Beispiele**

Herstellung der Polyetherpolyole:

Polyol A (Vergleich):

Polyol A ist ein nominal trifunktionelles Polyetherpolyol der Molmasse 3.000 g/mol, das durch Umsetzung von Glycerin mit Propylenoxid mittels KOH-Katalyse (0,41 Gew.-%, bezogen auf die Menge des fertigen Polyetherpolyols) bei 107°C und anschließende Abtrennung des Katalysators durch Neutralisation mit Schwefelsäure, Entwässerung und Filtration erhalten wurde.

Polyol B (Vergleich):

Polyol B ist ein nominal trifunktionelles Polyetherpolyol der Molmasse 3.000 g/mol, das durch Umsetzung von Glycerin mit Propylenoxid unter kontinuierlicher Dosierung der Starterverbindung mittels DMC-Katalyse (30 ppm, bezogen auf die Menge des fertigen Polyetherpolyols, eines Zinkhexacyanocobaltat-DMC-Katalysators, der als Liganden tert-Butanol und ein durch DMC-Katalyse erhaltenes Poly(oxypropylen)diol mit einem zahlenmittleren Molekulargewicht von 4000 g/mol enthält, beschrieben in EP-A 700 949, Bsp.1) bei 130°C erhalten wurde.

Polyol C:

Polyol C ist ein nominal trifunktionelles Polyetherpolyol der Molmasse 3.000 g/mol, das durch Umsetzung von Glycerin mit Propylenoxid unter kontinuierlicher Dosierung der Starterverbindung mittels DMC-Katalyse (30 ppm, bezogen auf die Menge des fertigen Polyetherpolyols eines Zinkhexacyanocobaltat-DMC-Katalysators, der als Liganden tert-Butanol und ein durch DMC-Katalyse erhaltenes Poly-(oxypropylen)diol mit einem zahlenmittleren Molekulargewicht von 4000 g/mol enthält, beschrieben in EP-A 700 949, Bsp.1) bei 130°C erhalten wurde. Während der Umsetzung wurde das Polyetherpolyol mittels einer Membrankolbenpumpe durch einen Strahldispergator (1 Bohrung mit Durchmesser 0,43 mm) mit einem Stoffstrom von 16 l/h umgepumpt. Der Druckabfall am Strahldispergator betrug dabei 10 bar, was einer Energiedichte von $1 \times 10^6$ J/m$^3$ entspricht.

Herstellung der Polyurethan-Weichschaumstoffe:

Für eine vergleichende Versuchsreihe wurden folgende Materialien eingesetzt:

Polyol A (Vergleich)
Polyol B (Vergleich)
Polyol C

TDI:                          Isomerengemisch von 2,4-Toluylendiisocyanat und 2,6- Toluylendüsocyanat im Verhältnis 80:20, kommerziell erhältlich unter dem Namen Desmodur® T80 (Bayer AG, D-51368 Leverkusen)

| Katalysator 1: | Bis(dimethylamino)ethylether |
| Silikonstabilisator 1: | Tegostab® BF 2370 (Th. Goldschmidt AG, D-45127 Essen) |
| Katalysator 2: | Zinnoktoatkatalysator, kommerziell erhältlich als Desmorapid® SO (Rheinchemie Rheinau GmbH, D-68219 Mannheim) |

Folgende Rezeptur zur Herstellung eines Polyurethan-Weichschaumstoffs kam zum Einsatz:

| Ausgangsstoff | Menge [g] |
| --- | --- |
| Polyol A, B oder C | 100,0 |
| Wasser | 6,0 |
| Silikonstabilisator 1 | 0,6 |
| Katalysator 1 | 0,1 |
| Katalysator 2 | 0,15 |
| TDI | 73,4 |

Herstellungsmethode:

Alle Ausgangsstoffe außer TDI wurden zunächst 20 Sekunden vermittels eines Hochgeschwindigkeitsrührers vermischt. Anschließend wurde das TDI hinzugegeben und die Mischung 5 Sekunden durch Rühren homogenisiert. Die aufschäumende Mischung wurde in eine offene, mit Papier ausgekleidete Form der Grundfläche 27 cm x 13 cm gegeben und nach dem Aufschäumen in einem auf 100°C beheizten Trockenschrank 30 Minuten gelagert. Nach dem Abkühlen wurde der Schaum in der Mitte aufgeschnitten und optisch beurteilt.

| Beispiel-Nr. | Polyol | Schaumbeurteilung |
| --- | --- | --- |
| 1 (Vergleich) | A | Feine und regelmäßige Zellstruktur, riss- und kollapsfrei |
| 2 (Vergleich) | B | Grobe, unregelmäßige Zellstruktur, teilweise kollabiert |
| 3 | C | Feine und regelmäßige Zellstruktur, riss- und kollapsfrei |

Man erhält durch die erfindungsgemäße Behandlung des DMC-katalysierten Polyols mit dem Strahldispergator ein Produkt (Polyol C), das sich im Gegensatz zu dem unbehandelten Produkt (Polyol B) problemlos zu einem Polyurethan-Weichschaumstoff verarbeiten lässt.

**Patentansprüche**

1. Verfahren zur Herstellung von Polyetherpolyolen durch Polyaddition von Alkylenoxiden an aktive Wasserstoffatome aufweisende Starterverbindungen in Gegenwart von Doppelmetallcyanid-Katalysatoren, bei dem während der Polyadditionsreaktion das Reaktionsgemisch mindestens einmal durch ein Mischaggregat geführt wird, das mindestens eine Zone mit einer Energiedichte von mindestens $10^5$ J/m$^3$ aufweist, wobei die Verweilzeit des Reaktionsgemischs in dieser Zone pro Durchgang mindestens $10^{-5}$ Sekunden beträgt.

2. Verfahren gemäß Anspruch 1, bei dem das Mischaggregat ein Hochdruckhomogenisator ist.

3. Verfahren gemäß Anspruch 2, bei dem der Hochdruckhomogenisator ein Strahldispergator ist.

**Claims**

1. Process for the preparation of polyether polyols by polyaddition of alkylene oxides to starter compounds having active hydrogen atoms in the presence of double metal cyanide catalysts, in which during the polyaddition reaction the reaction mixture is guided at least once through a mixing unit which has at least one zone with an energy density of at least $10^5$ J/m$^3$, wherein the residence time of the reaction mixture in this zone is at least $10^{-5}$ seconds per pass.

**2.** Process according to claim 1, in which the mixing unit is a high-pressure homogeniser.

**3.** Process according to claim 2, in which the high-pressure homogeniser is a jet disperser.

**Revendications**

**1.** Procédé de préparation de polyétherpolyols par polyaddition d'oxydes d'alkylène sur des composés de départ qui présentent des atomes d'hydrogène actifs, en présence de catalyseurs à cyanure métallique double, dans lequel pendant la réaction de polyaddition, le mélange de réaction est passé au moins une fois dans un dispositif de mélange qui présente au moins une zone dont la densité d'énergie est d'au moins $10^5$ J/m$^3$, le temps de séjour du mélange de réaction dans cette zone lors de chaque passage étant d'au moins $10^{-5}$ secondes.

**2.** Procédé selon la revendication 1, dans lequel le dispositif de mélange est un homogénéiseur à haute pression.

**3.** Procédé selon la revendication 2, dans lequel l'homogénéiseur à haute pression est un disperseur à jet.

# Fig. 1

# Fig. 2

# Fig. 3

# Fig. 4

# Fig. 5